# FASCICULE DE BREVET EUROPEEN

(11) **EP 1 262 231 B1**
(45) Date de publication et mention de la délivrance du brevet: **25.07.2012**
(21) Numéro de dépôt: 02291283.6
(22) Date de dépôt: 27.05.2002
(51) Int. Cl.: B01J 19/00, B01J 19/10, G21C 19/307, G21C 17/022, B01D 19/00, G21F 9/06

(54) **Procédé d'élimination sélective des composés organiques fonctionnalisés d'un milieu liquide**
Verfahren zu selektiver Entfernung von funktionellen organischen Verbindungen aus einem Flüssigmedium
Process for selective elimination of functional organic compounds from a liquid medium

(30) Priorité: 29.05.2001 FR 0106982
(43) Date de publication de la demande: 04.12.2002
(73) Titulaire: Commissariat à l'Énergie Atomique et aux Énergies Alternatives, 75015 Paris (FR); COMPAGNIE GENERALE DES MATIERES NUCLEAIRES, 78140 Velizy Villacoublay (FR)
(72) Inventeur: Moisy, Philippe, 30000 Nimes (FR); Blanc, Pierre, 30133 Les Angles (FR); Rey-Gaurez, Frédérique, 91300 Massy (FR); Nikitenko, Sergey, 142800 Stupino Moscow Distric (RU)
(74) Mandataire: Audier, Philippe André

(56) Documents cités:
- US-A- 4 045 336
- DATABASE WPI Section Ch, Week 200004 Derwent Publications Ltd., London, GB; Class E19, AN 2000-042711 XP002190042 & JP 11 300334 A (KUBOTA CORP), 2 novembre 1999 (1999-11-02)
- DATABASE WPI Section Ch, Week 198318 Derwent Publications Ltd., London, GB; Class D15, AN 1983-43186K XP002190043 & JP 58 052599 A (JGC CORP), 28 mars 1983 (1983-03-28)
- PATENT ABSTRACTS OF JAPAN vol. 005, no. 148 (C-072), 18 septembre 1981 (1981-09-18) & JP 56 081112 A (KANSAI PAINT CO LTD), 2 juillet 1981 (1981-07-02)

## Description

La présente invention a trait à un procédé d'élimination sélective des composés organiques fonctionnalisés d'un milieu liquide.

La présente invention permet notamment l'élimination des composés organiques fonctionnalisés, qui sont susceptibles de s'accumuler dans le mélange d'extractant et de diluant, mis en oeuvre dans les procédés de retraitement du combustible nucléaire ou les procédés d'assainissement, de décontamination d'installations nucléaires.

Le domaine technique de l'invention peut être défini comme celui de l'élimination des composés organiques fonctionnalisés, qui se trouvent dans un milieu liquide sans que les autres constituants du milieu liquide, tel que le solvant, ne se trouvent eux-mêmes affectés, c'est-à-dire dégradés ou détruits.

Parmi les composés organiques à éliminer certains ont une stabilité telle qu'elle conduit à des réactions de destruction très énergétiques, posant des problèmes importants de sûreté du procédé. Les plus connus de ces composés sont les nitrates d'alkyle dont les conditions d'explosibilité sont facilement atteintes.

La destruction des composés organiques requiert parfois des températures et pressions élevées, ce qui impose des contraintes sur les installations utilisées et implique une consommation importante d'énergie.

Enfin, fondamentalement, la sélectivité de ces réactions est souvent médiocre et, de ce fait, la dégradation du milieu liquide, dans lequel se trouvent les composés organiques, est importante, conduisant à la formation de nouveaux composés qu'il faut éliminer dans une nouvelle étape.

JP 11 300 334 décrit un procédé d'élimination des composés organochlorés par traitement ultrasonore en présence d'oxygène.

Aucune des techniques mises en oeuvre jusqu'à présent, à des fins d'élimination des composés organiques se trouvant dans un milieu liquide, tel qu'un solvant, n'a donné satisfaction.

En d'autres termes, il n'existe aucun traitement chimique et/ou physique qui permette d'éliminer les composés organiques fonctionnalisés sélectivement d'un milieu liquide.

Il apparaît donc, à la lumière de ce qui précède, qu'il existe un besoin non satisfait pour un procédé sélectif d'élimination des composés organiques fonctionnalisés qui se trouvent dans un milieu liquide.

Le but de la présente invention est, entre autres, de fournir un procédé d'élimination des composés organiques fonctionnalisés se trouvant dans un milieu liquide qui réponde à ce besoin.

Le but de la présente invention est encore de fournir un tel procédé qui ne présente pas les inconvénients, limitations, défauts et désavantages des traitements chimiques et/ou physiques de l'art antérieur et qui soit, en outre, sélectif quant à l'élimination de ces composés organiques.

Ce but, et d'autres encore, sont atteints, conformément à l'invention par un procédé d'élimination sélective des composés organiques fonctionnalisés se trouvant dans un milieu liquide, dans lequel on fait circuler un courant de gaz dans le milieu liquide, et on soumet simultanément le milieu liquide à l'action d'ondes ultrasonores.

L'objet de l'invention est décrit dans le libellé de la revendication indépendante 1. D'autres aspects de l'invention sont décrits dans les revendications dépendantes 2 à 16.

Le procédé selon l'invention consiste à soumettre le milieu liquide à un champ ultrasonore qui permet un phénomène de cavitation et qui aboutit à l'implosion des bulles de cavitation. L'élimination des composés organiques est ainsi réalisée « sonochimiquement », c'est-à-dire que l'énergie fournie au système pour réaliser les réactions, conduisant à l'élimination des composés organiques, est due au phénomène de cavitation obtenu lors de l'irradiation du milieu par une onde ultrasonore.

Selon l'invention, simultanément à l'action des ultrasons, on fait circuler un courant de gaz dans le milieu liquide. C'est précisément l'association que l'on peut qualifier de synergique entre l'action des ultrasons et la circulation du gaz qui conduit à une élimination sélective des composés organiques fonctionnalisés, c'est-à-dire sans que les constituants du milieu liquide, tel qu'un solvant, autres que les composés organiques fonctionnalisés à éliminer, ne soient, en aucune façon, affectés, dégradés ou détruits.

La circulation du gaz conduit à favoriser la cavitation et à évacuer les composés à éliminer, ainsi que les gaz issus de la décomposition des composés organiques fonctionnalisés à détruire.

Pour la première fois et grâce à la combinaison de l'action des ultrasons et de la circulation du gaz, selon le procédé de l'invention, l'élimination sélective, des composés organiques fonctionnalisés se trouvant dans un milieu liquide, est possible, ceci avec un fort rendement.

En d'autres termes, le procédé de l'invention permet l'élimination sélective des composés fonctionnalisés, par rapport aux autres constituants du milieu liquide, par exemple, un couple extractant-diluant. Le procédé présente de nombreux avantages. Entre autres, sa sélectivité permet l'élimination des composés visés sans dégrader le milieu réactionnel, par exemple liquide ou gazeux, qui peut être réutilisé ultérieurement dans le procédé industriel, et sans former de nouveaux composés qui seraient encore à détruire.

Le procédé selon l'invention est très efficace car on peut obtenir une élimination quantitative des composés organiques sous la forme de composés gazeux ne présentant pas de difficulté pour leur gestion à venir.

En effet, ces composés sont évacués du milieu sous l'effet conjugué, synergique, selon l'invention de l'onde ultrasonore et de la circulation d'un flux gazeux.

Le fonctionnement du procédé selon l'invention ne nécessite pas l'ajout de réactifs supplémentaires. En effet, l'énergie transmise par le champ ultrasonore est directement fournie à la réaction sous forme de chaleur et de pression dans la bulle de cavitation.

Le procédé selon l'invention présente une grande sécurité car le potentiel énergétique accumulé, par exemple dans le réacteur où il se déroule, est faible, compte tenu de la localisation de la réaction dans la bulle de cavitation. En effet, les températures et pressions considérables obtenues dans la bulle de cavitation, lors de son implosion, sont localisées uniquement dans ces bulles, dont les dimensions sont réduites.

De plus, le procédé selon l'invention ne nécessite pas généralement la mise en oeuvre de pressions et/ou de température élevées, ce qui est un atout important à de nombreux égards, tels que la sécurité et la possibilité d'utiliser des installations classiques en milieu radioactif.

L'invention concerne également un dispositif d'élimination sélective des composés organiques fonctionnalisés se trouvant dans un milieu liquide comprenant une enceinte contenant ledit milieu liquide, des moyens pour faire circuler un courant de gaz dans ledit milieu liquide, et des moyens pour soumettre simultanément ledit milieu liquide à l'action d'ondes ultrasonores.

D'autres caractéristiques et avantages de l'invention ressortiront mieux de la description qui va suivre, donnée à titre illustratif et non limitatif en référence aux dessins joints dans lesquels :
- la figure 1 est une vue en perspective schématique d'un dispositif de l'invention ;
- la figure 2A est un graphique qui donne la variation de la concentration C (en M), en tert-nitrobutyle (t-Bu NO₂) (concentration-initiale 4.10⁻² M), en milieu dodécane (V = 50 ml ; T = 29°C), en fonction du temps (t en minutes), lors de la sonolyse (f = 20 kHz ; I = 1,66 W.cm⁻²), sous un flux d'argon (D = 10 L.h⁻¹) (exemple 3) ;
- la figure 2B est un graphique, dans lequel les concentrations de la figure 2A ont été exprimés sous la forme logarithmique ;
- la figure 3 est un graphique qui donne la variation de la concentration C (en M) en t-BuNO₂ volatilisée sans l'effet des ultrasons sous un flux d'argon (D = 10 L.h⁻¹) (exemple 3).

De manière détaillée, selon le procédé de l'invention, on élimine sélectivement les composés organiques se trouvant dans un milieu liquide, grâce à l'action conjuguée des ultrasons et d'un courant de gaz que l'on peut qualifier de courant à gaz vecteur. Un des paramètres importants pour la maîtrise de la sélectivité de la réaction conduisant à la destruction, la dégradation, l'élimination des composés organiques fonctionnalisés est la différence de tension de vapeur existant entre le constituant majoritaire du milieu liquide et le ou les composé(s) organique(s) à éliminer.

De préférence, selon l'invention, la tension de vapeur du ou des composé(s) organique(s) à éliminer est donc différente de la tension de vapeur du constituant majoritaire du milieu liquide. De préférence encore, cette tension de vapeur est supérieure à celle du constituant majoritaire du milieu liquide.

Un autre paramètre important pour la maîtrise de la sélectivité de la réaction ; conduisant à l'élimination des composés organiques, est l'aptitude à la solvatation de ces composés.

Le phénomène, qui conduit à l'élimination sélective des composés organiques, par exemple sous la forme de solutés dans un solvant, est basé sur le phénomène de cavitation induit par la transmission d'une onde ultrasonore dans un milieu biphasique liquide-gaz. En effet, l'étape ultime du phénomène de cavitation est une implosion qui conduit localement, c'est-à-dire dans la bulle de cavitation, à des températures et à des pressions colossales, pouvant atteindre plusieurs milliers de degrés et plusieurs centaines d'atmosphères.

Ainsi, les composés, par exemple les solutés, qui sont contenus dans la bulle de cavitation ou à proximité lors de l'implosion, sont soumis à des conditions de température et de pression extrêmes. Dans ces conditions, les solutés, par exemple minéraux ou organiques, sont décomposés selon une réaction de rupture homolytique des liaisons ou par thermolyse.

Par ailleurs, il faut noter que l'échange de matière entre l'intérieur de la bulle de cavitation et le milieu liquide, tel qu'une solution, est régi par les lois de la diffusion (lois de FICK). C'est-à-dire que la diffusion d'un composé, tel qu'un soluté, est contrôlée, d'une part, par ses caractéristiques physico-chimiques (comme la tension de vapeur, le volume molaire, le taux de solvatation,...) et, d'autre part, par la différence de concentration entre les deux zones où il y a diffusion. Ainsi, lors du phénomène de cavitation, qui est une succession de compressions et de dilatations de la bulle de cavitation, le composé, tel qu'un soluté, peut s'accumuler et se concentrer dans la bulle de cavitation.

L'élimination sélective des composés, par exemple des solutés, conduit majoritairement à la production de produits gazeux, qui seront éliminés par le courant gazeux mis en oeuvre dans le procédé de l'invention, d'alkyles non fonctionnalisés et d'eau. Les produits gazeux sont, par exemple, de l'oxygène, du gaz carbonique, de l'azote, des oxydes d'azote, de l'hydrogène ou encore la molécule elle-même diluée dans le gaz vecteur.

Il est possible de contrôler la température et la pression dans la bulle de cavitation, lors de l'implosion, à l'aide, d'une part, du type de gaz vecteur utilisé et de la température et de la pression dans l'enceinte où se déroule le traitement, et, d'autre part, des conditions sonochimiques imposées, qui sont notamment la fréquence et l'intensité du flux ultrasonore.

Selon l'invention, on soumet le milieu liquide à traiter à la température T et à la pression P à un flux ultrasonore de fréquence f et d'intensité I, tandis qu'un courant de gaz vecteur gazeux, ayant un débit D, circule simultanément dans le milieu liquide.

On a vu que ce courant de gaz permet à la fois d'amplifier le phénomène de cavitation et d'éliminer, d'évacuer les produits gazeux du milieu liquide.

Le critère de choix de ces différents paramètres est l'augmentation de la cinétique de décomposition du ou des composés organiques, sans perdre la sélectivité de la réaction conduisant à l'élimination de ces composés.

Selon l'invention, on utilise des ultrasons d'une fréquence f de 15 kHz à 1,5 MHz.

L'intensité acoustique des ultrasons, qui est, par exemple, mesurée par une mesure calorimétrique rapportée à la surface de la source ultrasonore, est de 1 W.cm⁻² à 20 W.cm⁻².

Le débit du courant de gaz ou gaz vecteur est généralement de 10 à 600 mL.min⁻¹.

Le gaz vecteur est choisi généralement parmi les gaz rares, tels que l'hélium, le néon, l'argon ; l'air ; et leurs mélanges.

Le procédé selon l'invention est généralement réalisé, par exemple à une pression et à une température, respectivement, de 10 à 100°C et de 1 à 10 bars.

De préférence, le procédé selon l'invention est réalisé à la pression atmosphérique et à température ambiante, voisine, par exemple, de 20°C.

Les composés organiques fonctionnalisés, que l'on élimine par le procédé de l'invention, sont des composés qui comprennent au moins une fonction chimique. Le procédé selon l'invention permet d'éliminer tout composé organique fonctionnalisé, quel que soit le type de la ou des fonction(s) que comporte ce composé.

De manière générale, le ou les composé(s) organique(s) fonctionnalisé(s) (généralement qualifié(s) de « soluté(s) ») comprend(comprennent) au moins une fonction choisie parmi les fonctions comprenant au moins un atome choisi parmi les atomes d'azote, d'oxygène, de soufre, de phosphore et les atomes d'halogènes, tels que le chlore, le brome, l'iode et le fluor.

Le reste de la molécule des composés organiques fonctionnalisés, hors la fonction, est généralement essentiellement constitué d'atomes d'hydrogène et de carbone.

Ladite fonction pourra donc être choisie notamment parmi toutes les fonctions connues en chimie organique, comme les fonctions acide carboxylique, acide sulfonique, acide phosphorique, anhydride, ester, halogénure d'acide, amide, nitrile, aldéhyde, cétone, alcool, thiol, amine, éther, nitrite organique, nitro organique, nitrate organique et les fonctions halogénures.

Il est à noter que le procédé selon l'invention permet le traitement sûr des composés instables, tels que les nitrates d'alkyle.

Le milieu liquide à traiter peut être un milieu monophasique, par exemple un milieu organique ou bien aqueux, mais il peut s'agir aussi d'un milieu polyphasique, par exemple biphasique, constitué, par exemple, d'une phase organique et d'une phase aqueuse.

La phase organique et/ou aqueuse peut comprendre, en outre, d'autres composés, tels que de l'acide nitrique ou des sels nitrates métalliques.

La phase organique peut comprendre essentiellement un solvant organique.

Dans l'application préférée du procédé selon l'invention, le solvant est constitué essentiellement par un mélange extractant-diluant, mis en oeuvre dans les procédés de retraitement du combustible nucléaire ou les procédés d'assainissement, de décontamination des installations nucléaires.

Les extractants sont choisis, par exemple, parmi les phosphates d'alkyle, tels que le phosphate de tributyle (TBP) et les alkylamides.

Les diluants sont choisis, par exemple, parmi les alcanes, tels que le dodécane, les alcools, et les acides carboxyliques.

Une phase organique typique du milieu liquide à traiter, selon l'invention, sera constitué, par exemple de TBP, dans un diluant, de préférence, un diluant aliphatique, tel que le tétra-propylène hydrogéné (TPH) ou le dodécane.

Dans les milieux constitués par les mélanges extractant-diluant, mentionnés ci-dessus, les composés organiques fonctionnalisés à éliminer sont des composés essentiellement formés, suite à des réactions chimiques de dégradation - en particulier, d'hydrolyse ou de radiolyse - des extractants, des diluants, de l'acide nitrique et des sels nitrates métalliques. Ces composés sont donc, par exemple, des nitrates d'alkyle.

Le milieu liquide à traiter peut être une solution, ou bien une suspension aqueuse ou organique. Dans le cas d'une solution, les composés organiques fonctionnalisés à éliminer sont évidemment qualifiés de « solutés ».

Enfin, le procédé selon l'invention peut être réalisé en mode continu, ou bien en mode discontinu (« batch »).

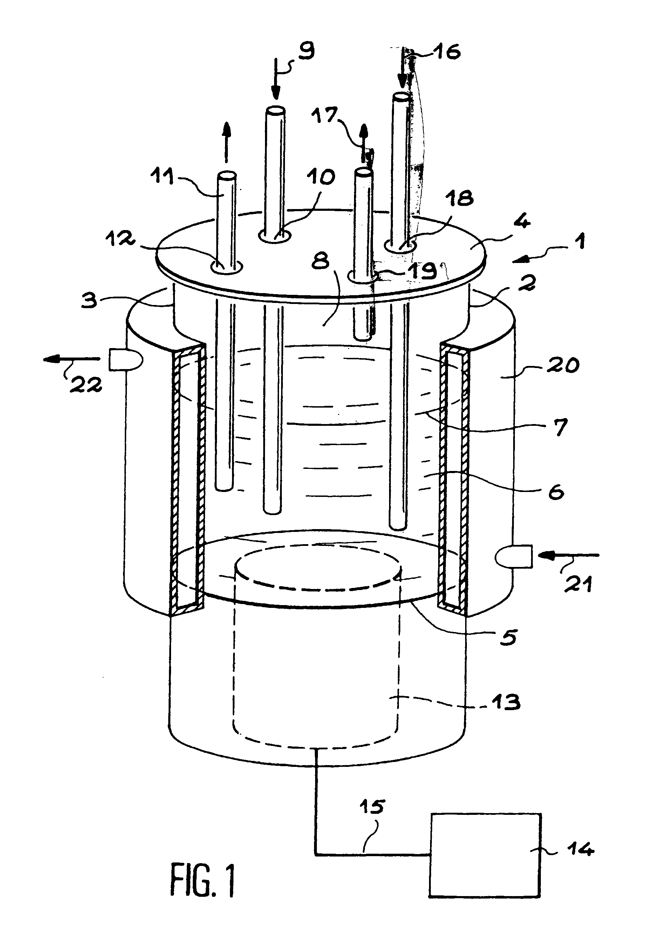

Le dispositif pour mettre en oeuvre le procédé selon l'invention, décrit sur la figure 1, comprend essentiellement un réacteur (1), encore appelé « sonoréacteur » ou « réacteur sonochimique ».

Ce réacteur a, sur la figure 1, la forme d'un cylindre droit pourvu de parois latérales (2, 3), d'un couvercle, de préférence amovible (4), et d'une base (5). Dans cette enceinte cylindrique, se trouve la solution à traiter (6) dont le niveau supérieur (7) est généralement inférieur au plan du couvercle (4), de manière à ménager un espace libre (8) entre le niveau de la solution et le couvercle.

La solution à traiter contenant les structures, les molécules chimiques à dégrader, à éliminer, est introduite dans le réacteur par la canalisation (9) qui traverse le couvercle en (10). Dans le cas d'un fonctionnement du réacteur en continu, la solution à traiter circule ensuite dans le réacteur et en ressort par l'intermédiaire de la canalisation (11) qui traverse le couvercle en (12). Il est bien évident que dans le cas d'un fonctionnement « batch », en discontinu, la solution à traiter ne circule pas dans le réacteur, mais y est introduite par la canalisation (9), jusqu'à ce que le niveau adéquat soit atteint, et en est soutirée lorsque le traitement est déterminé.

Il est à noter que la solution à traiter qui peut être un effluent aura pu être, au préalable, mise en température et en pression.

Le réacteur est muni de moyens pour générer et transmettre des ultrasons, des ondes ultrasonores, dans la solution à traiter. Ces moyens pour transmettre les ultrasons sont constitués, sur la figure 1, par un émetteur d'ondes ultrasonores (13) placé, par exemple, sous la base du réacteur. Cet émetteur d'ultrasons ou sonde à ultrasons (13) a pour fonction de transmettre à la solution les ondes ultrasonores générées par un générateur (14), relié par l'intermédiaire d'un câble ou fil (15).

Pour mettre en oeuvre le procédé selon l'invention, sont également prévus des moyens pour faire circuler un gaz vecteur dans le réacteur et dans la solution. Ces moyens comprennent une entrée et une sortie sous la forme de canalisations (16, 17) qui traversent le couvercle en (18, 19), afin d'introduire un gaz, dit « gaz vecteur », dans la solution et de le faire circuler dans le réacteur, puis de l'évacuer. Ces moyens comportent également, généralement, une pompe et des moyens pour mesurer et réguler le débit de gaz vecteur. Le gaz vecteur sortant du réacteur par la canalisation (17) est généralement chargé des composés à éliminer par l'action des ultrasons.

Le gaz, qui sort du réacteur, est donc ensuite traité dans des moyens (non représentés), tels qu'un filtre, pour le débarrasser des composés dont il est chargé et le purifier en vue d'un éventuel recyclage.

La température de la solution est, de préférence, maintenue constante par des moyens de régulation de la température, qui sont, sur la figure 1, sous la forme d'une double enveloppe (20) ou chemise prévue autour des parois du cylindre et dans laquelle circule un fluide caloporteur introduit en (21) et ressortant en (22).

Dans le cas d'une utilisation sous pression, il est judicieux de prévoir des moyens d'étanchéité pour clore le sonoréacteur.

Le volume du réacteur est choisi notamment en fonction du volume ou du débit - dans le cas d'un fonctionnement en continu - de la solution à traiter, ainsi que des capacités du générateur à fournir une intensité ultrasonore suffisante.

L'invention va maintenant être décrite en référence aux exemples suivants, donnés à titre illustratif et non limitatif.

### Exemples

### Exemple 1

### Décomposition de composés nitrite organique (RONO)

Les exemples (1a à 1e) suivants concernent la sonolyse en milieu dodécane ou TBP pur (milieu réactionnel) de 3 isomères du nitrite de butyle (C₄H₉ONO, noté BuONO), à savoir : le nitrite de n-butyle, noté n-BuONO, le nitrite d'isobutyle, noté i-BuONO, et le nitrite de tert-butyle, noté t-BuONO.

Les exemples (1a à 1e) étudient respectivement la stabilité du milieu réactionnel, l'effet de la concentration et de la température d'ébullition du soluté, et de la fréquence des ultrasons, et du flux gazeux lors de la sonolyse.

### Exemple 1a

### Stabilité du milieu réactionnel

Dans cet exemple, on part d'une solution organique TBP (phosphate de tributyle) pure, ou de TBP, préalablement contacté avec de l'eau, ou encore de TBP dilué à 30 % dans le dodécane ou le n-octane.

On soumet cette solution (V = 100 mL à 45°C) à un flux ultrasonore (f = 20 kHz ; I = 3,5 W.cm⁻²), et l'on mesure la quantité de TBP décomposée au cours du temps de sonolyse.

Quelle que soit la composition de la solution, les quantités de TBP décomposées augmentent avec le temps de sonolyse. La variation linéaire de l'accumulation de produit de décomposition en fonction du temps (pour une durée de sonolyse inférieure à 100 minutes) montre que la cinétique est d'ordre zéro et a permis d'évaluer les vitesses de décomposition indiquées dans le tableau 1.

**Tableau 1**

| Milieu | TBP pure | TBP pré-équilibré avec de l'eau | TBP dilué à 30 % dans le dodécane | TBP dilué à 30 % dans le n-octane |
|---|---|---|---|---|
| Constante cinétique µmol.min⁻¹ | 26 | 15 | 5 | inférieure à 2 |

| | | | | |
|---|---|---|---|---|
| f = 20 kHz ; I = 3,5 W.cm⁻² ; V = 100 mL ; T = 45°C. | | | | |

Dans cet exemple, les produits de décomposition connus du TBP ont été identifiés : dibutyl phosphate (DBP), monobutyl phosphate (MBP) et acide phosphorique.

Dans le cas du TBP pur, les vitesses de formation ont été évaluées pour le DBP et le mélange MBP + H₃PO₄, respectivement, de l'ordre de 4,2 µmol.min⁻¹ et de 8,5 µmol.min⁻¹, soit au total une vitesse de formation de produits de dégradation de l'ordre de 13 µmol.min⁻¹.

De plus, il a été observé que des produits de dégradation rédox du TBP (changement du degré d'oxydation du phosphore) s'accumulent en solution jusqu'à une concentration limite, puis sont volatilisés. La cinétique de formation de produits rédox a été évaluée à une valeur de l'ordre de 13 µmol.min.⁻¹ pour une durée inférieure à 100 min.. Un ralentissement de la vitesse de formation de composés réduits a été observé pour des durées supérieures à 100 min..

Au total, la vitesse de décomposition du TBP pur est évaluée à 26 µmol.min⁻¹ (tableau 1).

Dans le cas où le TBP a été prééquilibré initialement avec de l'eau, la vitesse de décomposition du TBP est plus faible et est de l'ordre de 15 µmol.min.⁻¹ (tableau 1).

Par ailleurs, il faut noter que la dilution du TBP (par exemple à 30 %) dans un alcane (dodécane ou n-octane) conduit à une diminution de la vitesse de décomposition du TBP, respectivement de 5 µmol.min.⁻¹ et inférieure à 2 µmol.min.⁻¹ (tableau 1).

Par ailleurs, il faut noter que, dans le cas où le TBP a été pré-équilibré avec une phase aqueuse d'acide nitrique, la vitesse de décomposition est nettement diminuée et qu'il ne se forme pas de produit de réduction du TBP.

Par exemple, dans des conditions identiques, la vitesse de décomposition du TBP, pur ou dilué à 30 % dans le dodécane pré-équilibré avec HNO₃ 4M est respectivement de 10 µmol.min⁻¹ ou de 3 µmol.min⁻¹.

Par ailleurs, le suivi dans le flux gazeux sortant du sonoréacteur, des produits de sonolyse d'un système biphasique constitué de 50 mL de TBP, dilué à 30 % dans le dodécane, et de 50 mL d'acide nitrique 4 M, dans des conditions sonochimiques similaires aux conditions précédentes, montre que la composition de la phase gazeuse est la somme de celle observée lors de la sonolyse de HNO₃ (principalement NO et NO₂) et du diluant (principalement CH4, C₂H₄, C₂H₆ et C₂H₂) , et comprend aussi des produits de réaction de ces composés entre eux (en particulier CO et CO₂).

De plus, il faut noter qu'il n'a pas été observé de formation de composé du type nitrate ou nitrite organique, mais l'accumulation d'acide nitreux dans le milieu réactionnel qui est le produit de la sonolyse de l'acide nitrique.

### Exemple 1b

### Effet de la concentration

Lors de la sonolyse (f = 20 kHz, I = 2,5 W.cm⁻², T ≅ 30°C) de nitrite de n-butyle (n-BuONO) (environ 0,40 M) en milieu TBP et dodécane, la concentration de n-BuONO diminue linéairement avec le temps (cinétique d'ordre zéro). Les constantes cinétiques évaluées dans ces conditions sont regroupées dans le tableau 2.

En revanche, dans le cas où la concentration initiale de n-BuONO est plus faible (0,04 M), la cinétique de disparition est d'ordre 1. Le tableau 2 regroupe les constantes cinétiques évaluées dans des conditions sonochimiques similaires.

**Tableau 2**

| Milieu | TBP | Dodécane | TBP | Dodécane |
|---|---|---|---|---|
| Concentration Initiale (M) | 0,41 | 0,41 | 0,041 | 0,041 |
| Ordre cinétique | 0 | 0 | 1 | 1 |
| Constante cinétique | 0,3 mmol.min⁻¹ | 0,2 mmol.min⁻¹ | 0,025 min.⁻¹ | 0,012 min.⁻¹ |
| Température d'ébullition | 284°C | 216°C | 284°C | 216°C |

| | | | | |
|---|---|---|---|---|
| f = 20 kHz ; I = 2,5 W.cm⁻² ; V = 100 mL ; T = 32°C. | | | | |

D'une part, il faut noter que les vitesses d'élimination sont plus élevées en milieu TBP pur qu'en milieu dodécane. Par ailleurs, en milieu 20 % éthanol dans l'eau, et pour une faible concentration de n-BuONO (0,041 M), une constante de vitesse de disparition (ordre 1) de l'ordre de 0,01 min.⁻¹ a été observée, ce qui confirme l'effet de milieu sur la vitesse d'élimination.

D'autre part, l'exploitation de ces constantes cinétiques permet de comparer la quantité de n-BuONO éliminée durant 100 min.. En milieu TBP : pour une faible concentration de n-BuONO, environ 3,85 mmoles sont consommées, alors que pour une concentration plus importante, 14,5 mmoles sont consommées. Ainsi, il apparaît que plus la concentration est importante, plus la vitesse de disparition est élevée. Par comparaison avec les résultats de l'exemple 1a, il faut noter qu'en 100 min., seulement 0,26 mmole de TBP est éliminée lors de la sonolyse du TBP pur.

### Exemple 1c

### Effet de la température d'ébullition

Lors de la sonolyse (f = 20 kHz, I = 2,5 W.cm⁻², T ≅ 30°C) de n- et i-BuONO (respectivement 0,04 M à 0,03 M) en milieu TBP pur (Teb = 284°C), la disparition de ces 2 isomères a été observée. Les résultats ainsi que les températures d'ébullition sont regroupés dans le tableau 3.

**Tableau 3**

| BuONO | Ordre cinétique | Constante cinétique (min⁻¹) | Temps de demi-réaction (min.) | Température d'ébullition (°C) |
|---|---|---|---|---|
| n-BuONO | 1 | 0,025 | 27,7 | 78 |
| i-BuONO | 1 | 0,037 | 18,7 | 66 |

| | | | | |
|---|---|---|---|---|
| f = 20 kHz ; I = 2,5 W.cm⁻² ; V = 100 mL ; T 32°C. | | | | |

A partir de ces résultats, il faut noter que la diminution de la température d'ébullition du composé à éliminer augmente la vitesse de disparition lors de la sonolyse.

En milieu dodécane (Teb = 216,2°C), le même effet a été observé dans des conditions sonochimiques peu différentes (f = 20 kHz ; I = 3,4 W.cm⁻² ; V = 50 mL ; T = 20°C). Les constantes cinétiques sont regroupées dans le tableau 4.

**Tableau 4**

| | n-BuONO | i-BuONO | t-BuONO |
|---|---|---|---|
| Température d'éballition | 78°C | 66°C | 62°C |
| Dodécane | 0,024 | 0,054 | 0,091 |

| | | | |
|---|---|---|---|
| f = 20 kHz, I = 3,3 W.cm⁻², T ≅ 20°C. | | | |

### Exemple 1d

### Effet de la fréquence des ultrasons

Les résultats concernant la sonolyse des 3 isomères n-BuONO, i-BuONO et t-BuONO en milieu dodécane lors de la sonolyse à une fréquence de 20 et 500 kHz (T = 20°C), sont regroupés dans le tableau 5.

**Tableau 5**

| Isomère | n-BuONO | | i-BuONO | | t-BuONO | |
|---|---|---|---|---|---|---|
| Energie de liaison BuO-NO (à 298 K) | 177,8 kJ.mol⁻¹ | | 175,7 kJ.mol⁻¹ | | 171,1 kJ.mol⁻¹ | |
| Température d'ébullition | 78°C | | 66,5°C | | 62°C | |
| Cinétique | k (10⁻² min.⁻¹) | t_{1/2} (min) | k (10⁻² min.⁻¹) | t_{1/2} (min) | k (10⁻² min.⁻¹) | t_{1/2} (min) |
| 20 kHz (I = 3,33 W.cm⁻²) | 2,42 | 29 | 5,39 | 13 | 9,12 | 8 |
| 500 kHz (I = 3,06 W.cm⁻²) | 0,163 | 425 | 0,299 | 231 | 0,287 | 179 |

Ces résultats font apparaître que l'élimination de BuONO est plus rapide à une fréquence de 20 kHz qu'à 500 kHz. Par ailleurs, il faut noter qu'à 20 kHz et 500 kHz, les constantes cinétiques diminuent quand la température d'ébullition ou l'énergie de la liaison BuO-NO augmente, ce qui confirme les résultats regroupés dans les tableaux 3 et 4.

### Exemple 1e

### Effet du flux gazeux

Dans cet exemple, l'effet du flux de gaz vecteur est observé lors de la sonolyse de n-BuONO à 20 kHz.

Pour ce faire, le suivi en solution et dans un piège situé en sortie du réacteur est réalisé, soit sans, soit avec courant d'argon à deux températures (respectivement 24°C et 30°C) lors de la sonolyse. Les résultats sont regroupés dans le tableau 6.

**Tableau 6**

| | Total éliminé | Accumulation dans le piège | Destruction par sonolyse | Constante cinétique k (t_{1/2}) |
|---|---|---|---|---|
| Avec flux d'Ar 10 L.h⁻¹/24°C | 86, 5 % | 17,4 % | 69,1 % | 2,67 10⁻² min.⁻¹ (26 min.) |
| Sans flux d'Ar 24°C | 54 % | 1,9 % | 52 % | 1,36 10⁻² min.⁻¹ (51 min.) |
| Avec flux d'Ar 10 L.h⁻¹/30°C | 99,6 % | 12,4 % | 87,2 % | 3,46 10⁻² min.⁻¹ (20 min.) |

| | | | | |
|---|---|---|---|---|
| f = 20 kHz ; [n-BuONO] initiale = 4 10⁻² M ; milieu dodécane ; t = 20 min. ; I = 1,66 W.cm⁻². | | | | |

Ces résultats font apparaître, d'une part, que l'utilisation d'un flux gazeux favorise la destruction de n-BuONO par sonolyse, et, d'autre part, que l'élimination du produit à détruire est favorisée par le flux gazeux.

Il a également été observé qu'une augmentation de la température de la solution augmente la cinétique d'élimination de n-BuONO lors de la sonolyse avec un courant d'argon.

De plus, il a été vérifié que le produit de sonolyse n'est pas NO₂, mais probablement NO, qui est un produit de thermolyse classique de BuONO.

### Exemple 2

### Décomposition d'un composé iodo organique (RI)

L'effet des ultrasons lors de la sonolyse de n-iodobutane (n-BuI), dont le point d'ébullition est de l'ordre de 130°C, est étudié dans cet exemple.

### Exemple 2a

### Effet de la fréquence des ultrasons

Le tableau 7 regroupe les résultats obtenus avec ce composé en milieu dodécane lors de la sonolyse à 20 kHz et 500 kHz.

**Tableau 7**

| | Température d'ébullition | 20 kHz | 500 kHz |
|---|---|---|---|
| k (10⁻² min.⁻¹)n-BuI | 130°C | 0,22 | 0,14 |
| k(10⁻²min⁻¹)n-BuONO | 78°C | 2,15 | 0,14 |

Ces résultats montrent que l'élimination du n-iodobutane par sonochimie en milieu dodécane est effective en milieu dodécane, qui n'est pas le milieu le plus favorable à l'effet recherché.

Par ailleurs, le suivi analytique des « pièges », permettant de recueillir les composés issus du sonoréacteur et véhiculés par le gaz vecteur, ont permis de vérifier que la totalité du iodobutane détruit lors de la sonolyse est éliminée, puis piégée sous forme de I₂, espèce non gênante et volatile.

### Exemple 2b

### Influence du débit de gaz vecteur

Cet exemple concerne l'influence du débit de gaz vecteur sur la cinétique d'élimination du iodobutane (tableau 8). En effet, compte tenu de la décomposition du iodobutane en iode volatil (I₂), une augmentation de la vitesse d'élimination de I₂ doit conduire à une augmentation de la vitesse de décomposition de n-BuI.

**Tableau 8**

| | | |
|---|---|---|
| Débit (L.h⁻¹) | 10 | 30 |
| k (10-3 min.⁻¹) | 2,76 | 3,23 |

| | | |
|---|---|---|
| f = 20 kHz ; T = 50°C ; Ar. | | |

Bien que faible, il apparaît qu'une augmentation du débit gazeux augmente la cinétique d'élimination de n-BuI.

De plus, une analyse qualitative de la composition du piège montre que la quantité de n-BuI éliminée dans le piège sans décomposition est nettement inférieure à 10 % de la quantité détruite.

Compte tenu du mécanisme de décomposition de n-BuI, c'est-à-dire rupture homolytique de la liaison carbone iode, il est probable que la recombinaison des deux radicaux iode aboutit à la formation de I₂ qui est volatil dans le milieu réactionnel.

### Exemple 3

### Décomposition de composés nitro organique (RNO₂)

Les résultats de l'élimination sonochimique de deux isomères de nitrobutane (n-BuNO₂ et t-BuNO₂), caractérisés par des températures d'ébullition nettement plus importantes à celles des composés nitrite ou iodé, sont étudiés dans cet exemple (tableau 9).

Dans des conditions défavorables : faible concentration (de l'ordre de 5 10⁻² M), en milieu dodécane, et à une fréquence de 500 kHz, la sonolyse conduit à l'élimination des deux isomères.

**Tableau 9**

| | n-isomère | | | t-isomère | |
|---|---|---|---|---|---|
| Composé | n-BuNO₂ | n-BuI | n-BuONO | t-BuNO₂ | t-BuONO |
| Température d'ébullition | 152°C | 130°C | 78°C | 126°C | 62°C |
| k (500 kHz) (10⁻³ min.⁻¹) | 0,81 | 1,59 | 1,63 | 1,63 | 3,87 |

| | | | | | |
|---|---|---|---|---|---|
| milieu dodécane ; I ≈ 3 W.cm⁻² ; T = 20°C. | | | | | |

Dans les conditions retenues pour cet exemple, il faut noter que l'élimination des deux isomères, bien que plus lente que celle des composés nitrites (environ un facteur 2), est notable.

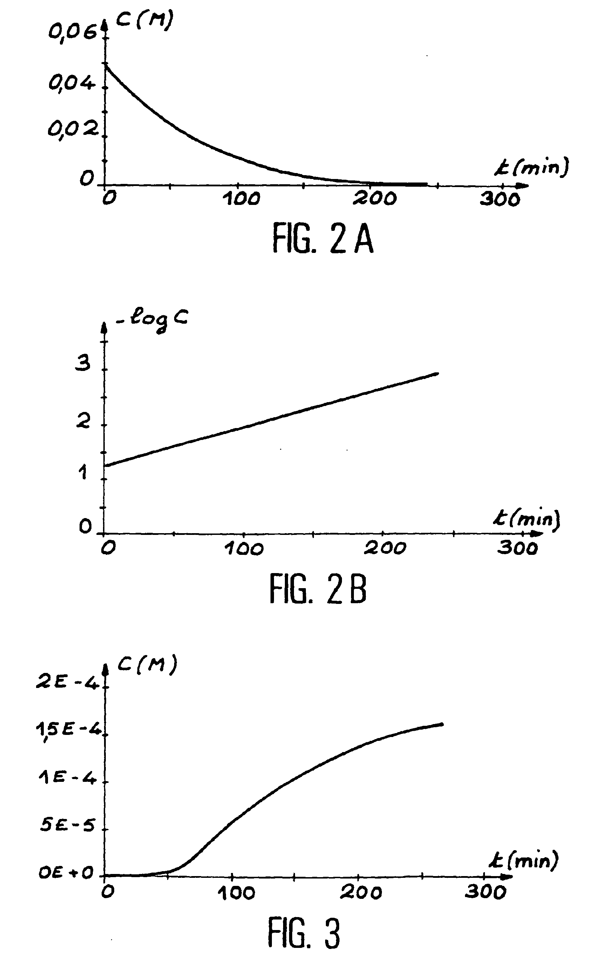

A titre d'exemple (figure 2), lors de la sonolyse à 20 kHz (I = 1,66 W.cm⁻² ; T = 28°C), la constante cinétique (ordre 1) est k = 7,05 10⁻³ min.⁻¹, c'est-à-dire que 99,8 % de t-BuNO₂ est éliminé au bout de 4 heures.

De plus, il faut noter que seulement 6,4 % de la quantité de t-BuNO₂ éliminée est volatilisée (Teb = 126°C) et se retrouve dans le piège. Ces résultats sont portés sur le graphique de la figure 3 qui donne la concentration C volatilisée en t-BuNO₂ (M) en fonction du temps t (minutes).

### Exemple 4

### Elimination du nitrate de dodécyle (C₁₂H₂₅ONO₂)

Pour illustrer l'aptitude des ultrasons à éliminer des composés dont la température d'ébullition est importante (environ 220°C), le cas du nitrate de dodécyle est développé plus particulièrement.

Par exemple, lors de la sonolyse (f = 20 kHz, I = 3,4 W.cm⁻² ; T = 27°C, D (Ar) = 150 mL.min⁻¹) d'une solution de nitrate de dodécyle (0,05 M) en milieu TBP (V = 50 mL), sa vitesse de disparition suit une cinétique d'ordre 1. Dans ces conditions, la constante cinétique a été évaluée de l'ordre de 0,00046 min.⁻¹, soit un temps de demi-réaction (élimination de 50 % de la quantité de matière initiale) de 25 h.

## Revendications

1. Procédé d'élimination sélective d'au moins un composé organique fonctionnalisé se trouvant dans un milieu liquide, dans lequel on fait circuler un courant de gaz vecteur dans le milieu liquide, et on soumet simultanément le milieu liquide à l'action d' ondes ultrasonores qui ont une fréquence de 15 kHz à 1,5 MHz et une intensité acoustique de 1 W.cm⁻² à 20 W.cm⁻² , moyennant quoi des produits gazeux sont majoritairement produits, lesdits produits étant évacués du milieu liquide par ledit courant de gaz vecteur circulant dans le milieu liquide.

2. Procédé selon la revendication 1, dans lequel le ou les composé(s) organique(s) fonctionnalisé(s) a(ont) une tension de vapeur différente de la tension de vapeur du constituant majoritaire du milieu liquide.

3. Procédé selon la revendication 1, dans lequel le débit du courant de gaz vecteur est de 10 à 600 mL.min.⁻¹.

4. Procédé selon la revendication 1, dans lequel le gaz vecteur est choisi parmi les gaz rares, l'air, et leurs mélanges.

5. Procédé selon la revendication 1, dans lequel la température et la pression du milieu liquide sont respectivement de 10 à 100°C et de 1 à 10 bars.

6. Procédé selon la revendication 5, dans lequel la pression est la pression atmosphérique et la température est la température ambiante.

7. Procédé selon la revendication 1, dans lequel ledit au moins un composé organique fonctionnalisé comprend au moins une fonction choisie parmi les fonctions comprenant au moins un atome choisi parmi les atomes d'azote, d'oxygène, de soufre, de phosphore et les atomes d'halogènes, tels que le chlore, le brome, et l'iode.

8. Procédé selon la revendication 7, dans lequel ladite fonction est choisie parmi les fonctions acide carboxylique, acide sulfonique, acide phosphorique, anhydride, ester, halogénure d'acide, amide, nitrile, aldéhyde, cétone, alcool, thiol, amine, éther, nitrite organique, nitro organique, nitrate organique et les fonctions halogénures.

9. Procédé selon la revendication 1, dans lequel le milieu liquide est un milieu monophasique.

10. Procédé selon la revendication 1, dans lequel le milieu liquide est un milieu polyphasique, par exemple biphasique.

11. Procédé selon la revendication 9, dans lequel le milieu monophasique est constitué d'une phase organique.

12. Procédé selon la revendication 10, dans lequel le milieu est un milieu biphasique constitué d'une phase organique et d'une phase aqueuse.

13. Procédé selon la revendication 11 ou la revendication 12, dans lequel la phase organique comprend essentiellement un solvant organique.

14. Procédé selon la revendication 13, dans lequel le solvant organique est constitué essentiellement par un mélange extractant-diluant, mis en oeuvre dans les procédés de retraitement du combustible nucléaire ou les procédés d'assainissement, de décontamination des installations nucléaires.

15. Procédé selon la revendication 14, dans lequel l'extractant est choisi parmi les phosphates d'alkyle, tels que le phosphate de tributyle (TBP) et les alkylamides.

16. Procédé selon la revendication 14, dans lequel le diluant est choisi parmi les alcanes, tels que le TPH, les alcools et les acides carboxyliques, le dodécane.

## Claims

1. Process for selectively removing at least one functionalized organic compound present in a liquid medium, in which a stream of vector gas is circulated in the liquid medium, and the liquid medium is simultaneously subjected to the action of ultrasonic waves which have a frequency from 15 kHz to 1.5 MHz and an acoustic intensity from 1 W.cm⁻² to 20 W.cm⁻², whereby gaseous products are predominantly produced, said products being removed from the liquid medium by said stream of vector gas circulating in the liquid medium.

2. Process according to Claim 1, in which the functionalized organic compound(s) has (have) a vapour pressure different from the vapour pressure of the majority constituent of the liquid medium.

3. Process according to Claim 1, in which the flow rate of the stream of gas is from 10 to 600 ml/min⁻¹.

4. Process according to Claim 1, in which the vector gas is chosen from rare gases, air and mixtures thereof.

5. Process according to Claim 1, in which the temperature and pressure of the liquid medium are from 10 to 100°C and from 1 to 10 bar, respectively.

6. Process according to Claim 5, in which the pressure is atmospheric pressure and the temperature is ambient temperature.

7. Process according to Claim 1, in which the said at least one functionalized organic compound comprises at least one function chosen from functions comprising at least one atom chosen from nitrogen, oxygen, sulphur and phosphorus atoms and halogen atoms such as chlorine, bromine and iodine.

8. Process according to Claim 7, in which the said function is chosen from carboxylic acid, sulphonic acid, phosphoric acid, anhydride, ester, acid halide, amide, nitrile, aldehyde, ketone, alcohol, thiol, amine, ether, organic nitrite, organic nitro and organic nitrate functions and halide functions.

9. Process according to Claim 1, in which the liquid medium is a one-phase medium.

10. Process according to Claim 1, in which the liquid medium is a multi-phase medium, for example a two-phase medium.

11. Process according to Claim 9, in which the one-phase medium consists in an organic phase.

12. Process according to Claim 10, in which the medium is a two-phase medium consisting in an organic phase and an aqueous phase.

13. Process according to Claim 11 or Claim 12, in which the organic phase essentially comprises an organic solvent.

14. Process according to Claim 13, in which the organic solvent consists essentially of an extractant-diluent mixture, used in processes for reprocessing nuclear fuel or processes for cleaning, decontaminating nuclear plants.

15. Process according to Claim 14, in which the extractant is chosen from alkyl phosphates, such as tributyl phosphate (TBP), and alkylamides.

16. Process according to Claim 14, in which the diluent is chosen from alkanes, such as HTP, alcohols, carboxylic acids, and dodecane.

## Patentansprüche

1. Verfahren zum selektiven Entfernen wenigstens einer sich in einem flüssigen Medium befindlichen, funktionalisierten organischen Verbindung, wobei man einen Vektorgasstrom das flüssige Medium durchströmen lässt und gleichzeitig das flüssige Medium der Einwirkung von Ultraschallwellen unterzogen wird, die eine Frequenz von 15 kHz bis 1,5 MHz und eine Schallintensität von 1 W.cm⁻² bis 20 W.cm⁻² besitzen, wodurch hauptsächlich gasförmige Produkte erzeugt werden und diese Produkte durch diesen das flüssige Medium durchströmenden Vektorgasstrom aus dem flüssigen Medium abgeführt werden.

2. Verfahren gemäß Anspruch 1, wobei die funktionalisierte(n) organische(n) Verbindung(en) einen vom Dampfdruck des Hauptbestandteils des flüssigen Mediums verschiedenen Dampfdruck aufweist (aufweisen).

3. Verfahren gemäß Anspruch 1, wobei die Durchflussgeschwindigkeit des Vektorgases 10 bis 600 ml.min⁻¹ beträgt.

4. Verfahren gemäß Anspruch 1, wobei das Vektorgas aus Edelgasen, Luft und ihren Gemischen ausgewählt ist.

5. Verfahren gemäß Anspruch 1, wobei die Temperatur und der Druck des flüssigen Mediums 10 bis 100 °C beziehungsweise 1 bis 10 bar betragen.

6. Verfahren gemäß Anspruch 5, wobei der Druck Atmosphärendruck ist und die Temperatur Raumtemperatur ist.

7. Verfahren gemäß Anspruch 1, wobei die wenigstens eine funktionalisierte organische Verbindung wenigstens eine funktionelle Gruppe aufweist, die aus den funktionellen Gruppen ausgewählt ist, die wenigstens ein aus einem Stickstoff-, Sauerstoff-, Schwefel- und Phosphoratom und Halogenatomen wie etwa Chlor, Brom und Iod ausgewähltes Atom umfassen.

8. Verfahren gemäß Anspruch 7, wobei die funktionelle Gruppe aus Carbonsäure-, Sulfonsäure-, Phosphorsäure-, Anhydrid-, Ester-, Säurehalogenid-, Amid-, Nitril-, Aldehyd-, Keton-, Alkohol-, Thiol-, Amin-, Ether-, organischen Nitrit-, organischen Nitro-, organischen Nitrat- und Halogenidfunktionen ausgewählt ist.

9. Verfahren gemäß Anspruch 1, wobei das flüssige Medium ein Einphasenmedium ist.

10. Verfahren gemäß Anspruch 1, wobei das flüssige Medium ein Mehrphasen-, zum Beispiel Zweiphasenmedium ist.

11. Verfahren gemäß Anspruch 9, wobei sich das Einphasenmedium aus einer organischen Phase zusammensetzt.

12. Verfahren gemäß Anspruch 10, wobei das Medium ein Zweiphasenmedium ist, das sich aus einer organischen Phase und einer wässrigen Phase zusammensetzt.

13. Verfahren gemäß Anspruch 11 oder Anspruch 12, wobei die organische Phase im Wesentlichen ein organisches Lösungsmittel umfasst.

14. Verfahren gemäß Anspruch 13, wobei sich das organische Lösungsmittel im Wesentlichen aus einem Extraktionsmittel-Verdünnungsmittel-Gemisch zusammensetzt, das in Verfahren zur Wiederaufarbeitung von Kernbrennstoffen oder Verfahren zur Reinigung und Dekontaminierung kerntechnischer Anlagen eingesetzt wird.

15. Verfahren gemäß Anspruch 14, wobei das Extraktionsmittel aus Alkylphosphaten wie etwa Tributylphosphat (TBP) und Alkylamiden ausgewählt ist.

16. Verfahren gemäß Anspruch 14, wobei das Verdünnungsmittel aus Alkanen wie etwa TPH, Alkoholen, Carbonsäuren und Dodecan ausgewählt ist.
